(19) **Europäisches Patentamt / European Patent Office / Office européen des brevets**

(11) **EP 1 287 609 B1**

(12) # FASCICULE DE BREVET EUROPEEN

(45) Date de publication et mention de la délivrance du brevet:
**25.01.2012 Bulletin 2012/04**

(21) Numéro de dépôt: **01938332.2**

(22) Date de dépôt: **23.05.2001**

(51) Int Cl.:
***H02M 7/48*** *(2007.01)*

(86) Numéro de dépôt international:
**PCT/FR2001/001613**

(87) Numéro de publication internationale:
**WO 2001/093412 (06.12.2001 Gazette 2001/49)**

(54) **DISPOSITIF DE CONVERSION D'ENERGIE MULTICELLULAIRE**

MEHRZELLIGE VORRICHTUNG ZUR UMWANDLUNG VON ENERGIE

MULTICELL DEVICE FOR CONVERTING ENERGY

(84) Etats contractants désignés:
**AT BE CH CY DE DK ES FI FR GB GR IE IT LI LU MC NL PT SE TR**

(30) Priorité: **26.05.2000 FR 0006786**

(43) Date de publication de la demande:
**05.03.2003 Bulletin 2003/10**

(73) Titulaire: **CENTRE NATIONAL DE LA RECHERCHE SCIENTIFIQUE (CNRS) 75016 Paris (FR)**

(72) Inventeurs:
• **GATEAU, Guillaume**
  **F-31570 Saint Pierre de Lages (FR)**
• **MEYNARD, Thierry, Antoine**
  **F-31240 L'Union (FR)**
• **FOCH, Henri, Simon, Jacques**
  **F-31200 Toulouse (FR)**

(74) Mandataire: **Habasque, Etienne J. Jean-François Cabinet Lavoix 2, place d'Estienne d'Orves 75441 Paris Cedex 09 (FR)**

(56) Documents cités:
**EP-A- 0 944 163      US-A- 3 596 369
US-A- 4 175 249      US-A- 5 737 201**

EP 1 287 609 B1

**Description**

La présente invention concerne un dispositif de conversion réversible d'énergie électrique, entre une source de tension continue et une source de courant.

Plus particulièrement, l'invention se rapporte à un tel dispositif comprenant d'une part des cellules de commutation comportant chacune deux interrupteurs, chacun étant lui-même constitué d'au moins un composant formant interrupteur, d'autre part des condensateurs associés aux cellules de commutation et adaptés pour maintenir entre les bornes homologues des deux interrupteurs de chaque cellule une tension de charge égale à une fraction de la tension de la source de tension, croissante en fonction de leur rang à partir de la source de courant et les bornes homologues des interrupteurs situées à l'extrémité du dispositif proche de la source de courant étant " court-circuitables ", en outre des dispositifs de commande connectés chacun à une cellule de commutation et adaptés pour commander les commutations des deux interrupteurs de la cellule en leur assurant des états opposés, ainsi que des moyens de pilotage des dispositifs de commande adaptés pour la fourniture d'un signal de référence adapté à la conversion souhaitée.

Un tel dispositif de conversion réversible d'énergie électrique est décrit dans le brevet européen publié sous le n° EP 0 555 432.

Il comprend N cellules de commutation, N étant un entier quelconque supérieur ou égal à 2. Chaque cellule est composée de deux interrupteurs qui sont commandés pour présenter des états complémentaires à tout instant. N interrupteurs des N cellules sont connectés en série et constituent une première série du dispositif, les N autres interrupteurs étant connectés en série, formant une seconde série du dispositif.

Les deux séries d'interrupteurs sont interconnectées, d'une part, par une extrémité commune, à une source de courant, d'autre part, par leurs extrémités opposées, aux bornes d'une source de tension.

A chaque cellule de commutation est associé un condensateur qui est connecté entre les bornes symétriques des deux interrupteurs de la cellule concernée. La cellule la plus proche de la source de tension peut être associée à un condensateur spécifique dans l'hypothèse où la source de tension n'est pas une source parfaite, en vue de compenser ces imperfections.

Dans le cas contraire, la source de tension, parfaite, joue le rôle de condensateur à l'égard de cette cellule.

Chaque condensateur a pour fonction de maintenir à ses bornes une tension, dite tension de charge du condensateur.

Une répartition de ces tensions de charge $Vc_k$ proportionnelle au rang $k$ de chaque condensateur,

$$Vc_k = \frac{kV}{N},$$ où V est la tension aux bornes de la source de tension, garantit aux bornes des interrupteurs bloqués une différence de tension égale à $\frac{V}{N}$ pour tous les interrupteurs bloqués. Ainsi, chaque condensateur est choisi pour présenter une tenue en tension fonction croissante de son rang, supérieure à la valeur $\frac{kV}{N}$.

Par ailleurs, des logiques de commande peuvent être synchronisées de sorte que l'ondulation de la tension de sortie du dispositif présente une amplitude égale à $\frac{V}{N}$ et une fréquence égale à NF, où F est la fréquence de commutation des interrupteurs des cellules de commutation. Cette tension de sortie est la tension entre la borne de la source de tension située au potentiel le plus bas et la borne de la source de courant connectée au dispositif de conversion.

Cependant, on assiste aujourd'hui au développement de dispositifs de conversion d'énergie électrique de forte puissance, pour des niveaux de tension de la source de tension de plus en plus élevés. L'augmentation de cette tension entraîne indirectement une augmentation de la taille des condensateurs du dispositif, ceux-ci devant supporter des fractions de cette tension de plus en plus importantes. Ainsi aujourd'hui, au-delà de 6 kV, le prix et le volume du dispositif tendent à devenir prohibitifs.

L'invention vise à remédier aux inconvénients du dispositif classique décrit précédemment en créant un dispositif de conversion réversible d'énergie électrique capable d'étendre le domaine d'utilisation des dispositifs de conversion de forte puissance vers des niveaux de tension de plus en plus élevés, tout en permettant une réduction importante de son volume et tout en conservant les propriétés du convertisseur décrit dans la publication n° EP 0 555 432, rappelées précédemment.

L'invention a donc pour objet un dispositif de conversion réversible d'énergie électrique du type précité, caractérisé en ce qu'il comporte au moins deux étages montés en parallèle comportant chacun au moins deux cellules et au moins un condensateur, lesdits étages définissant deux groupes extrêmes d'interrupteurs et au moins un groupe intermédiaire d'interrupteurs communs à deux étages successifs, les deux groupes extrêmes comprenant chacun des interrupteurs, connectés en série, de chaque cellule appartenant respectivement au premier et au dernier étage, le groupe intermédiaire comprenant des paires d'interrupteurs, connectés en série, de cellules appartenant à deux étages voisins, et en ce que les condensateurs sont connectés transversalement en série entre les deux groupes extrêmes.

Le dispositif de conversion réversible d'énergie électrique selon l'invention peut en outre comporter une ou plusieurs des caractéristiques suivantes :

- le groupe intermédiaire comprend des interrupteurs, connectés en série, de cellules appartenant alternativement à deux étages voisins, lesdits interrupteurs étant unidirectionnels en tension et bidirectionnels en courant ;

- les deux interrupteurs de chacune desdites paires sont connectés en parallèle et sont bidirectionnels en tension et unidirectionnels en courant ;
- les composants formant interrupteurs sont tous identiques et chaque interrupteur est constitué de composants connectés en série dont le nombre est fonction de la tension maximale applicable entre ses bornes ;
- les moyens de pilotage comportent des moyens de traitement du signal de référence pour délivrer en sortie une pluralité de signaux secondaires de référence, et des moyens de transmission de chaque signal secondaire de référence à tous les dispositifs de commande de cellule de commutation d'un même étage ;
- les moyens de traitement sont adaptés pour délivrer une pluralité de signaux secondaires de référence dont la somme des valeurs à chaque instant est proportionnelle à la valeur du signal de référence, chaque signal secondaire de référence d'un étage situé, du côté de la source de tension, entre deux niveaux de potentiel donnés étant à chaque instant de valeur supérieure à la valeur d'un signal secondaire de référence d'un étage situé, du côté de la source de tension, entre deux niveaux de potentiel supérieurs ;
- le dispositif comporte deux étages ;
- la partie du dispositif située entre les deux condensateurs les plus proches de la source de courant et la source de courant comporte deux composants formant interrupteurs connectés en série sur chacun des premier et dernier groupes et deux diodes connectées d'une part en un point situé entre lesdits deux condensateurs et d'autre part en un point situé entre lesdits deux composants des premier et dernier groupes respectivement ;
- chaque étage comporte deux cellules de commutation ; et
- chaque étage comporte trois cellules de commutation.

L'invention sera mieux comprise à l'aide de la description qui va suivre, donnée uniquement à titre d'exemple et faite en se référant aux dessins annexés sur lesquels :

- la figure 1 est un schéma électrique de principe d'un dispositif de conversion selon l'invention dans le cas le plus général, dans lequel aucun ensemble de commande n'est représenté ;
- la figure 2 est un schéma électrique de principe d'un dispositif de conversion selon l'invention dans le cas où il comporte deux étages et deux cellules par étage, détaillant en outre un ensemble de commande de ce dispositif ;
- la figure 3 est un schéma électrique détaillant un mode de réalisation des cellules de commutation du dispositif de conversion représenté à la figure 2 ;

- la figure 4 représente l'allure des signaux de référence d'un ensemble de commande du dispositif de conversion représenté à la figure 2 ;
- la figure 5 représente l'allure des signaux en entrée et en sortie d'un premier dispositif de commande du dispositif de conversion représenté à la figure 2;
- la figure 6 représente l'allure des signaux en entrée et en sortie d'un deuxième dispositif de commande du dispositif de conversion représenté à la figure 2 ;
- la figure 7 représente l'allure des signaux en entrée et en sortie d'un troisième dispositif de commande du dispositif de conversion représenté à la figure 2 ;
- la figure 8 représente l'allure des signaux en entrée et en sortie d'un quatrième dispositif de commande du dispositif de conversion représenté à la figure 2 ;
- la figure 9 représente l'allure des courants circulant à travers deux condensateurs de premier et deuxième étages respectifs, du dispositif de conversion représenté à la figure 2 ;
- la figure 10 représente l'allure de la tension normalisée de sortie du dispositif de conversion représenté à la figure 2 ; et
- la figure 11 est un schéma électrique d'un dispositif de conversion à deux étages et deux cellules par étage, selon un autre mode de réalisation possible de l'invention.

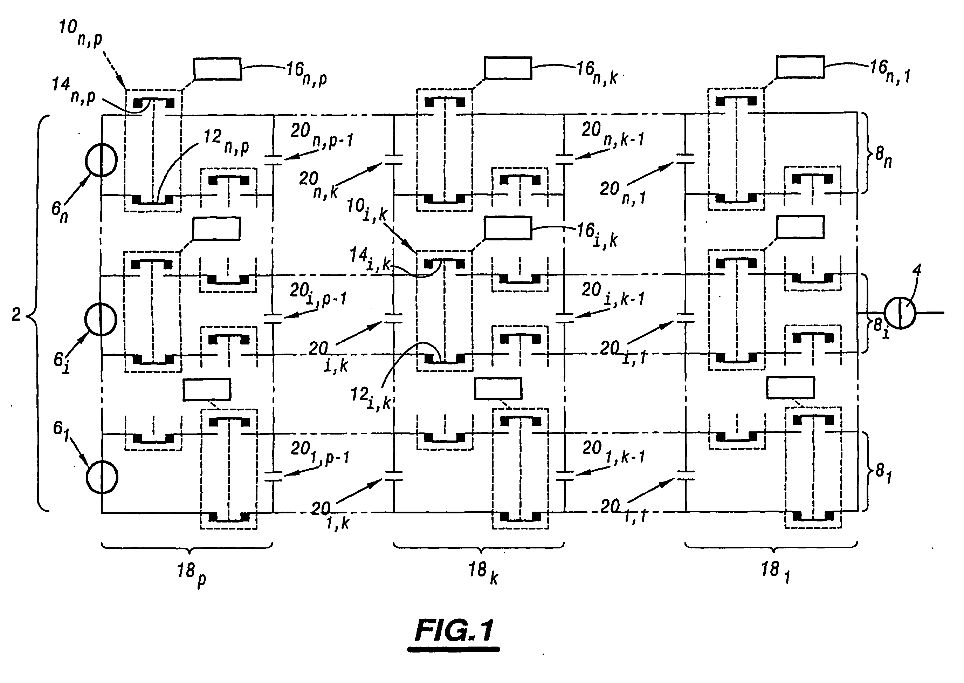

Le dispositif de conversion réversible d'énergie électrique représenté à la figure 1 comporte une source de tension 2 continue assurant une différence de potentiel de valeur E entre ses bornes et une source de courant 4 délivrant un courant 1 continu ou alternatif selon l'application envisagée.

Ainsi, par exemple, lorsque la source de courant délivre un courant alternatif symétrique, le dispositif de conversion correspond à un onduleur de tension ou, compte tenu de la réversibilité, à un redresseur de courant. Dans la suite de la description, on se placera toujours dans ce cas particulier.

La source de tension est constituée de n sources de tension secondaires $6_1$, ..., $6_n$, connectées en série et définissant, chacune entre ses bornes, n étages $8_1$, ..., $8_n$, successifs. Une source secondaire quelconque $6_1$ est par exemple constituée d'un condensateur et maintient une tension partielle $\frac{E}{n}$ entre ses bornes. Dans la suite, les étages sont numérotés dans l'ordre croissant des niveaux de potentiel auxquels ils sont raccordés du côté de la source de tension.

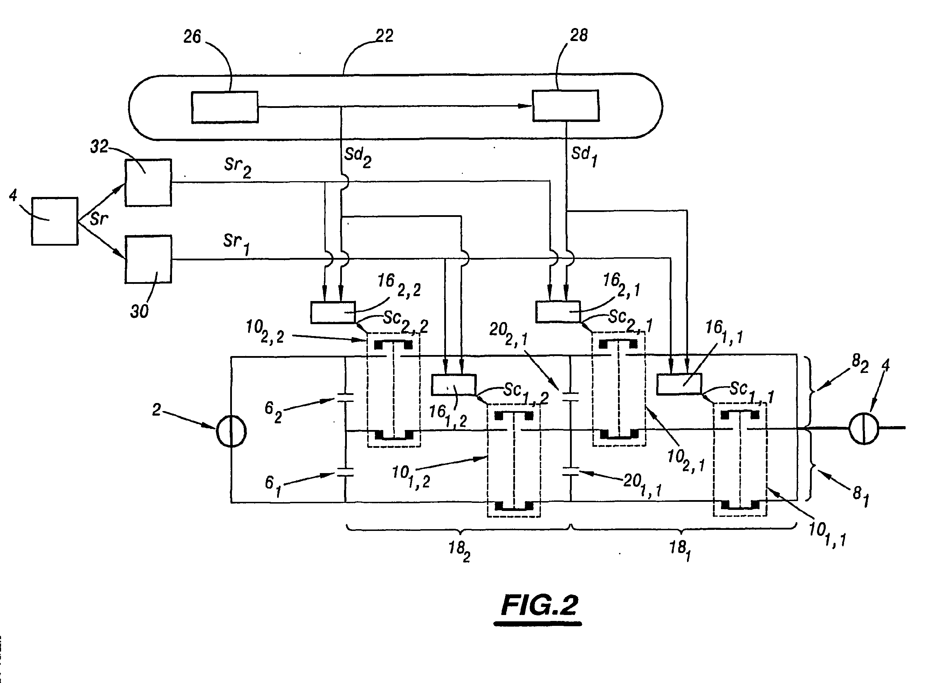

Chaque étage $8_i$ comporte p cellules de commutation $10_{i1}$, ..., $10_{ip}$. Chaque cellule de commutation $10_{ik}$ est constituée de deux interrupteurs $12_{ik}$ et $14_{ik}$ maintenus à des états opposés par un dispositif de commande $16_{ik}$ de leurs commutations connecté à la cellule $10_{ik}$. Les dispositifs de commande font partie d'un ensemble de commande qui sera détaillé lors de la description de la figure 2.

Les n étages définissent ainsi n+1 groupes d'interrupteurs, chacun desdits groupes étant connecté par une extrémité à la source de courant et par l'autre extrémité à l'un des n+1 niveaux de potentiel de la série de sources secondaires de tension $6_1$, ..., $6_n$. Comme pour les étages, les groupes d'interrupteurs sont numérotés dans l'ordre croissant des niveaux de potentiel auxquels ils sont connectés du côté des sources secondaires de tension. Ainsi, le premier groupe est connecté à la borne de la source de tension 2 de potentiel le plus bas et le dernier groupe est connecté à la borne de la source de tension 2 de potentiel le plus élevé.

Le premier groupe d'interrupteurs est constitué des interrupteurs $12_{1,1}$,..., $12_{1,p}$, des p cellules de commutation du premier étage, connectés en série. Le (n+1)-ème groupe d'interrupteurs est constitué des interrupteurs $14_{n,1}$, ..., $14_{n,p}$, des p cellules de commutation du n-ème étage, connectés en série. Le i-ème groupe d'interrupteurs, avec 1<i≤n, est constitué des interrupteurs $12_{i,1}$, ..., $12_{i,p}$, des p cellules de commutation du i-ème étage et des interrupteurs $14_{i-1,1}$, ..., $14_{i-1,p}$, des p cellules de commutation du (i-1)-ème étage, connectés alternativement en série.

De la sorte, transversalement aux n étages, p rangs $18_1$, ..., $18_p$, sont définis, chaque rang $18_k$ comportant n cellules de commutation, c'est-à-dire $10_{1,k}$, ..., $10_{n,k}$.

Entre deux rangs successifs $18_k$ et $18_{k+1}$, n condensateurs de rang k, $20_{1,k}$, ..., $20_{n,k}$, sont connectés en série à raison de un par étage. Ainsi, au i-ème étage, le condensateur $20_{i,k}$ est connecté d'une part au i-ème groupe d'interrupteurs, d'autre part au (i+1)-ème groupe d'interrupteurs. De plus, chaque condensateur est adapté pour maintenir entre ses bornes une tension de charge, fonction croissante de son rang k et représentant une fraction de la tension partielle de la source de tension secondaire de l'étage auquel il appartient. Par exemple, une répartition de ces tensions de charge proportionnelle au rang de chaque condensateur $20_{i,k}$, $E_{i,k}=\dfrac{kE}{pn}$, garantit aux bornes des interrupteurs ouverts une différence de tension inférieure ou égale à $\dfrac{E}{pn}$.

Le dispositif de conversion représenté à la figure 2 est un cas particulier du dispositif décrit précédemment, dans un mode de réalisation de l'invention adapté pour une utilisation avec une source de tension continue et une source de courant alternatif de fréquence $f_i$. Il comporte deux étages $8_1$ et $8_2$ et deux rangs $18_1$ et $18_2$.

E est la tension de la source de tension continue 2 qui charge deux condensateurs $6_1$ et $6_2$ constituant chacune une source de tension secondaire pour chaque étage, de tension partielle $\dfrac{E}{2}$. Entre les deux rangs $18_1$ et $18_2$, deux condensateurs $20_{1,1}$ et $20_{2,1}$ sont connectés en série comme décrit précédemment et sont dimensionnés pour supporter une tension de charge en fonction de leur rang (k = 1), d'une valeur de $E_{1,1}=E_{2,1}=\dfrac{E}{4}$.

Le dispositif comporte également quatre cellules de commutation $10_{1,1}$, $10_{1,2}$, $10_{2,1}$, $10_{2,2}$ commandées respectivement par quatre dispositifs de commande $16_{1,1}$, $16_{1,2}$, $16_{2,1}$, $16_{2,2}$. Ces quatre dispositifs de commande sont synchronisés et délivrent des signaux de commande logique à une fréquence F, adaptés pour assurer les commutations à des états opposés des deux interrupteurs de chaque cellule.

Dans le mode de réalisation décrit ici, la fréquence F est nettement supérieure à la fréquence $f_i$ et est choisie pour représenter plus précisément un multiple de $f_i$, par souci de simplicité.

Chaque dispositif de commande comporte par exemple un comparateur dont l'état logique en sortie est le résultat de la comparaison de deux signaux, dont l'un est issu d'un module de synchronisation 22 et dont l'autre est issu d'un générateur de pilotage 24.

Le dispositif de commande $16_{i,k}$ fournit donc en sortie un signal de commande $sc_{i,k}$ dont la valeur détermine l'état de la cellule de commutation $10_{i,k}$. Ainsi, par exemple, lorsque le signal de commande $sc_{i,k}$ vaut 1, l'interrupteur $12_{i,k}$ de la cellule de commutation $10_{i,k}$ est bloqué et l'intérrupteur $14_{i,k}$ de cette même cellule est passant. Inversement, lorsque le signal de commande $sc_{i,k}$ vaut 0, l'interrupteur $12_{i,k}$ de la cellule de commutation $10_{i,k}$ est passant et l'interrupteur $14_{i,k}$ de cette même cellule est bloqué. La commande simultanée des deux interrupteurs d'une même cellule à des état opposés ne sera pas davantage décrite par la suite, étant considérée comme connue de l'état de la technique.

Le module de synchronisation 22 comprend des moyens de génération 26 de signaux triangulaires alternatifs symétriques de fréquence F ainsi qu'un circuit retard 28, qui engendrent deux signaux $sd_1$ et $sd_2$ décalés d'un écart temporel égal à $\dfrac{1}{2F}$ et alimentant respectivement les dispositifs $16_{1,1}$, $16_{2,1}$ de commande de premier rang, et $16_{1,2}$, $16_{2,2}$ de deuxième rang.

Le générateur de pilotage 24 délivre quant à lui un signal de référence sr alternatif symétrique de fréquence $f_i$ identique à la fréquence de la source de courant 4.

Ce signal de référence est traité en sortie du générateur de pilotage 24 par deux modules de traitement respectifs 30 et 32 de premier et deuxième étage, pour fournir respectivement en sortie, deux signaux secondaires de référence $sr_1$ et $sr_2$. Ces deux signaux $sr_1$ et $sr_2$ alimentent respectivement les dispositifs de commande $16_{1,1}$, $16_{1,2}$ de premier étage et $16_{2,1}$, $16_{2,2}$ de deuxième étage.

Pour le bon fonctionnement du dispositif de conversion, les signaux $sr_1$ et $sr_2$ vérifient les deux relations suivantes :

$$sr_1 + sr_2 = 2sr, \qquad sr_1 \geq sr_2$$

Les deux modules de traitement 30 et 32 permettant de fournir de tels signaux à partir du signal de référence sr, sont considérés comme classiques et ne seront donc pas détaillés par la suite.

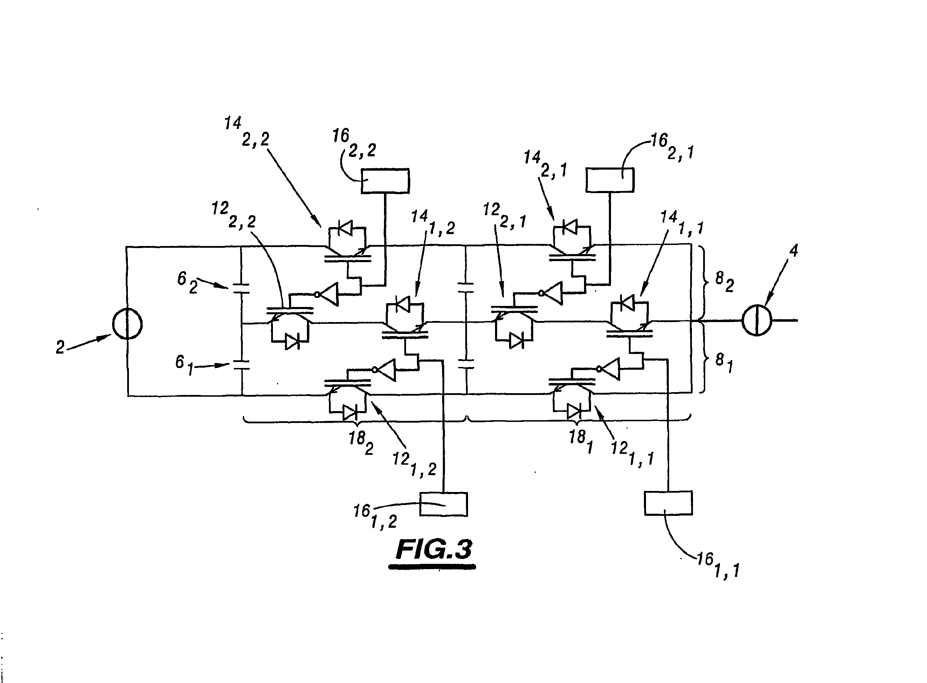

Comme représenté à la figure 3, les interrupteurs du convertisseur sont tous de même type, c'est-à-dire bidirectionnels en courant et unidirectionnels en tension et sont constitués par des transistors IGBT associés chacun à une diode en antiparallèle. Chacun de ces transistors IGBT peut être remplacé selon les applications par un transistor bipolaire Darlington, MOST, GTO, etc.

Dans ce mode de réalisation, on remarque que les quatre interrupteurs des premier et dernier groupes sont susceptibles de supporter une tension double de celle supportée par les quatre interrupteurs du deuxième groupe. Ceci pose un problème de dimensionnement hétérogène des interrupteurs du dispositif de conversion. Pour résoudre ce problème, il est préférable de remplacer chacun des quatre interrupteurs des premier et dernier groupes par deux interrupteurs identiques montés en série et positionnés dans le même état à chaque instant, ce qui ne modifie en rien le fonctionnement du dispositif.

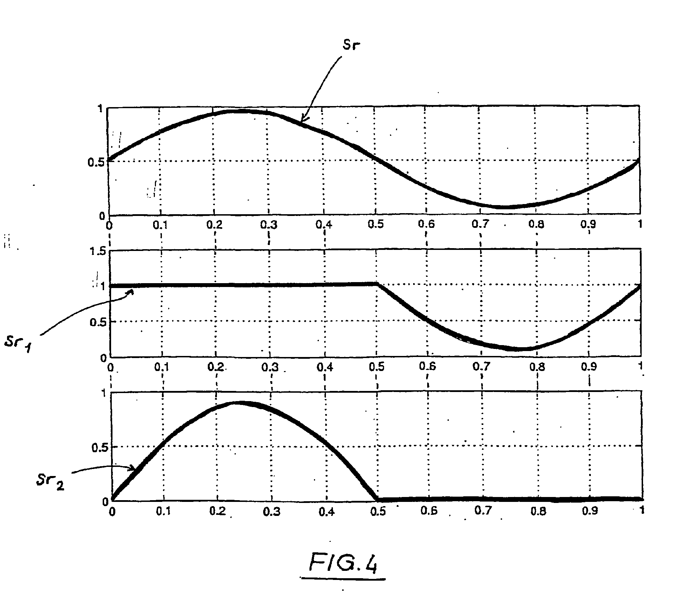

La figure 4 représente l'allure du signal de référence sr et des signaux secondaires de références $sr_1$ et $sr_2$, dans le mode de réalisation choisi, c'est à dire pour une source de tension continue et une source de courant alternatif de fréquence $f_i$.

Le signal sr est ici représenté sans unité, comme la somme d'un signal continu de valeur 0,5 et d'un signal sinusoïdal d'amplitude sensiblement inférieure à 0,5 et de fréquence $f_i$ normalisée à 1. Le signal $sr_1$ est alors défini par la relation suivante :

$$\begin{cases} sr_1 = 2 \times sr \quad , & \text{si } sr \leq 0,5 \\ sr_1 = 1 \quad , & \text{si } sr \geq 0,5 \end{cases}$$

Le signal $sr_2$ est quant à lui défini par la relation :

$$\begin{cases} sr_2 = 0 \quad , & \text{si } sr \leq 0,5 \\ sr_2 = 2 \times sr - 1, & \text{si } sr \geq 0,5 \end{cases}$$

On vérifie aisément qu'ainsi, à tout instant, les deux conditions $sr_1 + sr_2 = 2sr$ et $sr_1 \geq sr_2$ sont vérifiées.

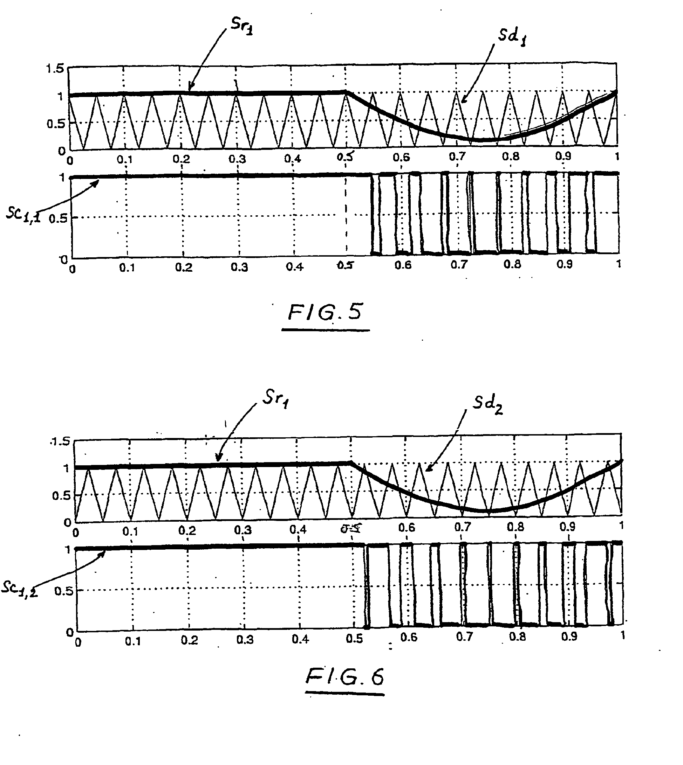

La figure 5 représente d'une part l'allure des deux signaux $sr_1$ et $sd_1$ fournis en entrée du dispositif de commande $16_{1,1}$ et d'autre part l'allure du signal de commande $sc_{1,1}$ fourni en sortie du même dispositif de commande $16_{1,1}$, en fonction des signaux fournis en entrée.

Le signal $sd_1$ est un signal triangulaire d'amplitude variant entre 0 et 1 et de fréquence F valant ici $20f_i$. Le signal $sc_{1,1}$ résultant est un signal en créneau, de valeur nulle lorsque la relation $sd_1 > sr_1$ est vérifiée et de valeur unité lorsque la relation $sd_1 < sr_1$ est vérifiée.

La figure 6 représente d'une part l'allure des deux signaux $sr_1$ et $sd_2$ fournis en entrée du dispositif de commande $16_{1,2}$ et d'autre part l'allure du signal de commande $sc_{1,2}$ fourni en sortie du même dispositif de commande $16_{1,2}$, en fonction des signaux fournis en entrée.

Le signal $sd_2$ est un signal triangulaire d'amplitude variant entre 0 et 1 et de fréquence F, décalé d'un écart temporel égal à $\dfrac{1}{2F}$ par rapport au signal $sd_1$. Le signal $sc_{1,2}$ est alors un signal en créneau, de valeur nulle lorsque la relation $sd_2 > sr_1$ est vérifiée et de valeur unité lorsque la relation $sd_2 < sr_1$ est vérifiée.

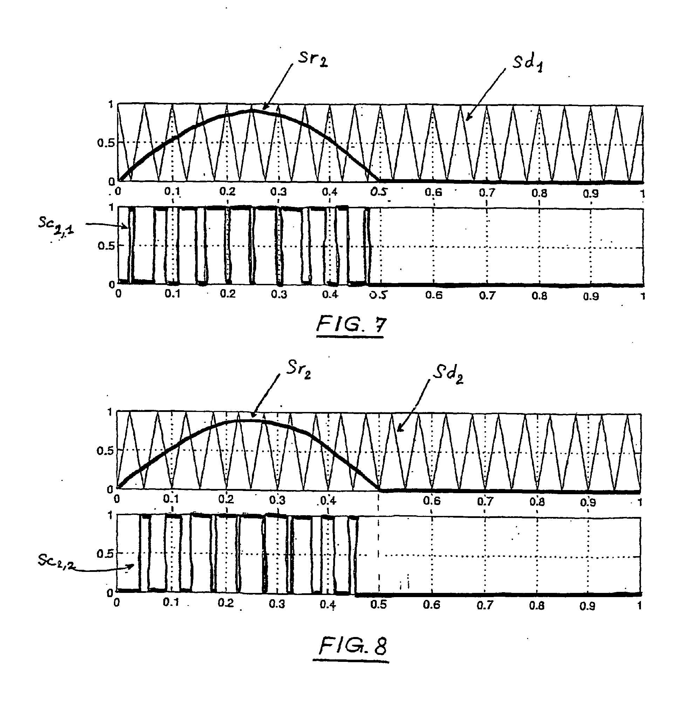

La figure 7 représente d'une part l'allure des deux signaux $sr_2$ et $sd_1$ fournis en entrée du dispositif de commande $16_{2,1}$ et d'autre part l'allure du signal de commande $sc_{2,1}$ fourni en sortie du même dispositif de commande $16_{2,1}$, en fonction des signaux fournis en entrée.

Le signal $sc_{1,1}$ est alors un signal en créneau, de valeur nulle lorsque la relation $sd_1 > sr_2$ est vérifiée et de valeur unité lorsque la relation $sd_1 < sr_2$ est vérifiée.

La figure 8 représente d'une part l'allure des deux signaux $sr_2$ et $sd_2$ fournis en entrée du dispositif de commande $16_{2,2}$ et d'autre part l'allure du signal de commande $sc_{2,2}$ fourni en sortie du même dispositif de commande $16_{2,2}$, en fonction des signaux fournis en entrée.

Le signal $sc_{2,2}$ est alors un signal en créneau, de valeur nulle lorsque la relation $sd_2 > sr_2$ est vérifiée et de valeur unité lorsque la relation $sd_2 < sr_2$ est vérifiée.

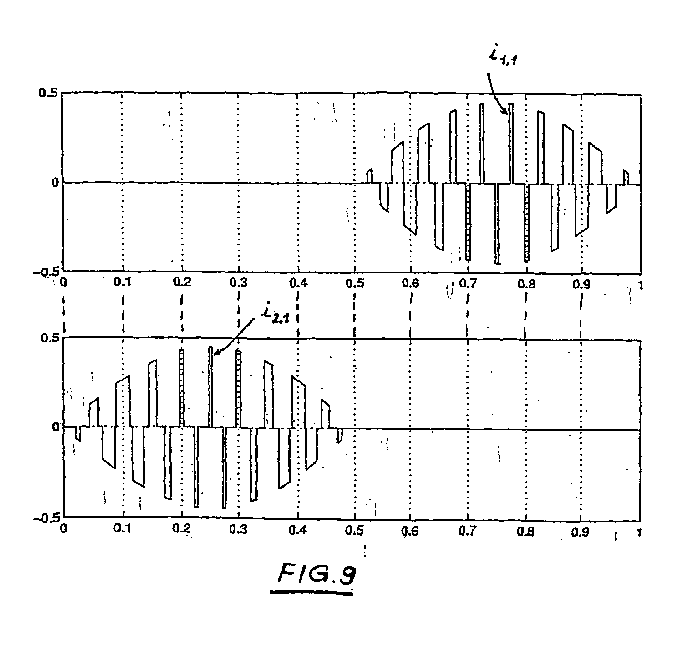

La figure 9 présente l'allure des courants $i_{1,1}$ et $i_{2,1}$ qui traversent respectivement les deux condensateurs $20_{1,1}$ et $20_{2,1}$.

La valeur de ces courants est directement liée à la synchronisation des dispositifs de commande, telle que décrite précédemment, et est ainsi contrôlée pour présenter une valeur moyenne nulle sur une période $\dfrac{1}{F}$, de façon à assurer une tension moyenne constante de $\dfrac{E}{4}$ aux bornes des condensateurs $20_{1,1}$ et $20_{2,1}$.

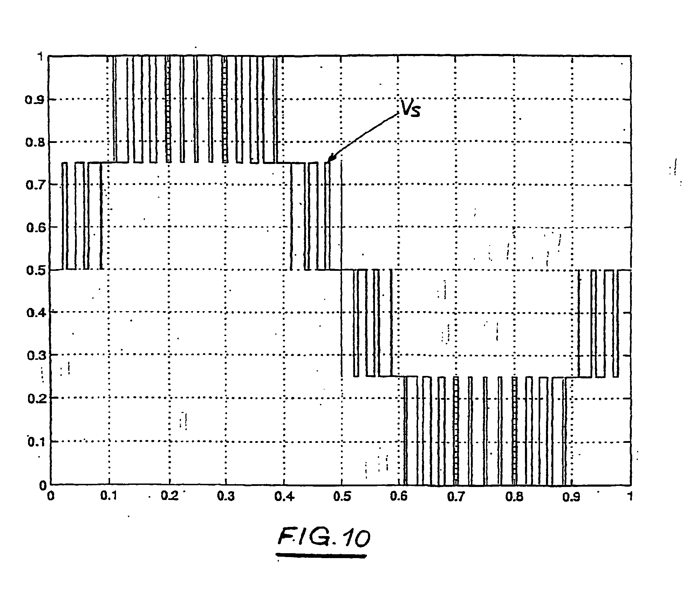

La figure 10 présente l'allure de la tension normalisée de sortie Vs du dispositif de conversion. Celle-ci est mesurée entre le niveau de potentiel le plus bas de la source de tension 2 et la borne de la source de courant 4 connectée au dispositif de conversion d'énergie.

La tension de sortie possède une ondulation de fréquence 2F et d'amplitude $\frac{E}{4}$ : ces deux conditions facilitent le filtrage de cette tension.

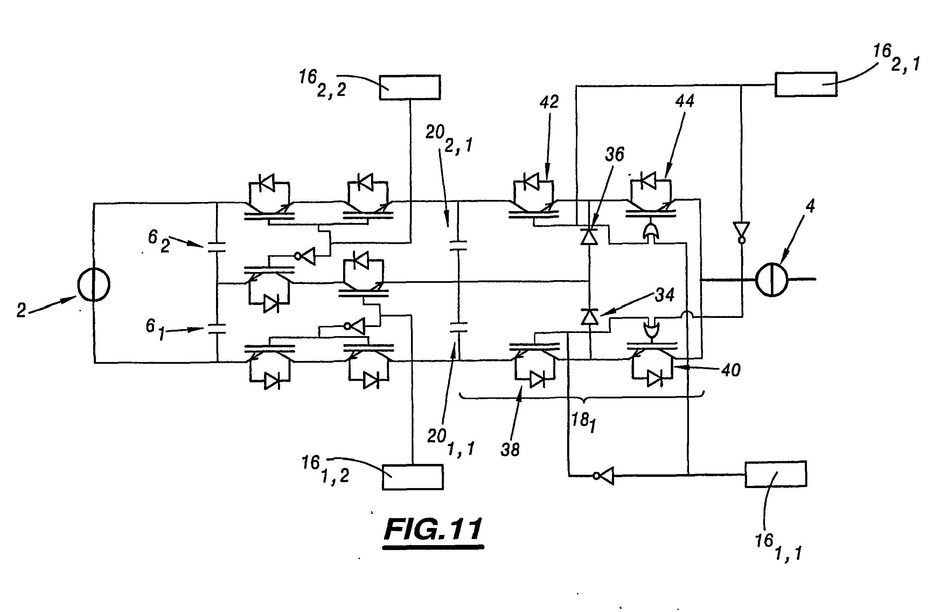

Un dispositif de conversion d'énergie à deux rangs et deux étages selon un autre mode de réalisation possible de l'invention est représenté à la figure 11.

Les interrupteurs des premier et troisième groupes comportent chacun deux composants formant interrupteurs. Par contre, le groupe intermédiaire d'interrupteurs n'apparaît que dans le second rang. Dans le premier rang $18_1$, une première diode 34 est connectée, d'une part à un point situé entre les deux composants 38 et 40 du premier groupe et du premier rang, et d'autre part à un point situé entre les deux condensateurs $20_{1,1}$ et $20_{2,1}$.

De même, une seconde diode 36 est connectée, d'une part au point situé entre les deux condensateurs $20_{1,1}$ et $20_{2,1}$, et d'autre part à un point situé entre les deux composants 42 et 44 du troisième groupe et du premier rang.

Ce mode de réalisation comporte un ensemble de commande sensiblement différent de l'ensemble de commande décrit précédemment, en ce qui concerne la commande du premier rang $18_1$. Mais ce nouvel ensemble de commande peut être déduit de façon classique de celui précédemment décrit à la figure 2 à l'aide d'une simple combinaison des dispositifs de commande $16_{1,1}$ et $16_{2,1}$ des cellules de commutation du premier rang $18_1$.

Pour le bon fonctionnement du dispositif, le composant 38 situé sur le premier groupe, entre le condensateur $20_{1,1}$ et la diode 34, reçoit en entrée un signal de commande égal à $\overline{sc_{1,1}}$, complément à 1 du signal $sc_{1,1}$, où $sc_{1,1}$ est le signal représenté à la figure 5.

Le composant 40 situé sur le premier groupe, entre la diode 34 et la source de courant 4, reçoit en entrée un signal de commande égal à $(\overline{sc_{1,1}} + \overline{sc_{2,1}})$, où $sc_{2,1}$ est le signal représenté à la figure 7 et où le symbole " + " représente l'opération logique " ou ".

Le composant 42, situé sur le troisième groupe, entre le condensateur $20_{2,1}$ et la diode 36, reçoit en entrée un signal de commande égal à $sc_{2,1}$.

Le composant 44, situé sur le troisième groupe, entre la diode 36 et la source de courant 4, reçoit en entrée un signal de commande égal à $(sc_{1,1} + sc_{2,1})$.

De la sorte, il y a équivalence entre ce dispositif de conversion et celui représenté à la figure 3, leur fonctionnement étant identique pour toutes les configurations possibles des signaux de commande $sc_{1,1}$ et $sc_{2,1}$ du premier rang $18_1$.

En effet, pour le dispositif de conversion représenté à la figure 3, lorsque $sc_{1,1}=0$ et $sc_{2,1}=0$, l'interrupteur $12_{1,1}$ est passant, l'interrupteur $14_{1,1}$ est bloqué, l'interrupteur $12_{2,1}$ est passant et l'interrupteur $14_{2,1}$ est bloqué. Ainsi, dans le premier rang $18_1$, le courant circule à travers le premier groupe d'interrupteurs, reliant directement la source de courant 4 à la borne de potentiel inférieur du condensateur $20_{1,1}$.

Pour le dispositif de conversion représenté à la figure 11, lorsque $sc_{1,1}=0$ et $sc_{2,1}=0$, $\overline{sc_{1,1}}=1$ donc l'interrupteur 38 est passant, $\overline{sc_{1,1}} + \overline{sc_{2,1}}=1$ donc l'interrupteur 40 est passant, $sc_{2,1}=0$ donc l'interrupteur 42 est bloqué et $sc_{1,1}+sc_{2,1}=0$ donc l'interrupteur 44 est bloqué. Ainsi, de même que dans le cas précédent, la borne de niveau de potentiel inférieur du condensateur $20_{1,1}$ est reliée directement à la source de courant 4 et le courant circule entre ces deux bornes.

On remarque que le courant effectue le même trajet à travers les deux dispositifs de conversion d'énergie représentés aux figures 3 et 11, lorsque $sc_{1,1}=1$ et $sc_{2,1}=1$.

On remarque aussi que la configuration $sc_{1,1}=0$ et $sc_{2,1}=1$ est une configuration impossible, puisqu'elle met les deux condensateurs $20_{1,1}$ et $20_{2,1}$ des dispositifs de conversion d'énergie des figures 3 et 11 en court-circuit.

Enfin, pour le dispositif de conversion d'énergie représenté à la figure 3, lorsque $sc_{1,1}=1$ et $sc_{2,1}=0$, l'interrupteur $12_{1,1}$ est bloqué, l'interrupteur $14_{1,1}$ est passant, l'interrupteur $12_{2,1}$ est passant et l'interrupteur $14_{2,1}$ est bloqué. Ainsi, le courant circule à travers le deuxième groupe dans le premier rang $18_1$, reliant directement le point situé entre les deux condensateurs $20_{1,1}$ et $20_{2,1}$ et la source de courant 4.

Pour le dispositif de conversion représenté à la figure 11, lorsque $sc_{1,1}=1$ et $sc_{2,1}=0$, $\overline{sc_{1,1}}=0$ donc l'interrupteur 38 est bloqué, $\overline{sc_{1,1}}+\overline{sc_{2,1}}=1$ donc l'interrupteur 40 est passant, $sc_{1,1}+sc_{2,1}=1$ donc l'interrupteur 44 est passant et $sc_{2,1}=0$ donc l'interrupteur 42 est bloqué. Ainsi, comme précédemment, dans le premier rang 18, le courant circule entre le point situé entre les deux condensateurs $20_{1,1}$ et $20_{2,1}$ et la source de courant 4. Par contre, son trajet est légèrement différent du trajet suivi par le courant dans le dispositif représenté à la figure 3, puisqu'il passe à travers la diode 36 et l'interrupteur 44, lorsqu'il circule du point situé entre les deux condensateurs $20_{1,1}$ et $20_{2,1}$ vers la source de courant 4 et à travers l'interrupteur fermé 40 et la diode 34, lorsqu'il circule de la source de courant 4 vers le point situé entre les deux condensateurs $20_{1,1}$ et $20_{2,1}$.

Cette dernière configuration montre que l'analogie entre les deux dispositifs n'est possible que parce qu'ils ne diffèrent que par leur premier rang 18, pour lequel il n'existe pas de condensateur entre l'interrupteur $14_{2,1}$ (ou l'interrupteur $12_{1,1}$) et la source de courant.

Ainsi, ce mode de réalisation permet de réduire davantage le volume et surtout le coût du dispositif de conversion, mais l'amélioration ne peut être apportée que sur le premier rang $18_1$.

Il apparaît clairement qu'un dispositif de conversion d'énergie électrique selon l'invention comporte l'avantage de présenter un encombrement moins important que les dispositifs multicellulaires classiques, ce qui étend son domaine d'utilisation vers des niveaux de tension encore plus élevés.

En effet, un dispositif classique à N=np cellules, nécessite np-1 condensateurs devant être dimensionnés pour supporter jusqu'à $\dfrac{(np-1)E}{np}$. Au contraire, un dispositif selon l'invention à N=np cellules (n étages, p rangs), nécessite n(p-1) = np-n condensateurs dimensionnés pour supporter une tension ne pouvant pas dépasser $\dfrac{(p-1)E}{n\ p}$, ce qui est nettement inférieur à la charge évoquée dans le cas précédent.

Par conséquent, un dispositif selon l'invention est de volume et donc de prix inférieur à un dispositif classique, à performance équivalente.

On notera que l'invention n'est pas limitée au mode de réalisation décrit.

Ainsi, en variante les interrupteurs des groupes intermédiaires d'indice i, avec $1 < i \leq n$ ne sont pas nécessairement connectés en série alternée comme décrit dans le mode de réalisation choisi. Les interrupteurs $12_{i,k}$ et $14_{i-1,k}$ du i-ème groupe intermédiaire et du k-ème rang peuvent être connectés en parallèle. Dans ce cas, les interrupteurs considérés doivent être bidirectionnels en tension et unidirectionnels en courant.

En variante également, la fréquence F n'est pas un multiple de $f_i$ et peut même être choisie sensiblement égale à $f_i$ pour certaines applications.

## Revendications

**1.** Dispositif de conversion réversible d'énergie électrique, entre une source de tension (2) continue et une source de courant (4), comprenant d'une part des cellules de commutation ($10_{i,k}$) comportant chacune deux interrupteurs ($12_{i,k}, 14_{i,k}$), chacun étant lui-même constitué d'au moins un composant formant interrupteur, d'autre part des condensateurs ($20_{i,k}$) associés aux cellules ($10_{i,k}$) de commutation et adaptés pour maintenir entre les bornes homologues des deux interrupteurs de chaque cellule une tension de charge égale à une fraction de la tension de la source de tension (2), décroissante en fonction de leur rang à partir de la source de tension (2) et les bornes homologues des interrupteurs situées à l'extrémité du dispositif proche de la source de courant (4) étant court-circuitables, en outre des dispositifs de commande ($16_{i,k}$) connectés chacun à une cellule de commutation ($10_{i,k}$) et adaptés pour commander les commutations des deux interrupteurs ($12_{i,k}, 14_{i,k}$) de la cellule en leur assurant des états opposés, ainsi que des moyens de pilotage (22, 24, 30, 32) des dispositifs de commande adaptés pour la fourniture d'un signal de référence adapté à la conversion souhaitée, **caractérisé en ce qu'**il comporte au moins deux étages ($8_i$) montés en parallèle comportant chacun au moins deux cellules ($10_{i,1}, ... 10_{i,p}$) et au moins un condensateur ($20_{i,1}, ... 20_{i,p-1}$), lesdits étages définissant deux groupes extrêmes d'interrupteurs ($12_{1,1}, ... 12_{1,p}$ et $14_{n,1}, ... 14_{n,p}$) et au moins un groupe intermédiaire d'interrupteurs commun à deux étages successifs, les deux groupes extrêmes comprenant chacun des interrupteurs, connectés en série, de chaque cellule appartenant respectivement au premier et au dernier étage, le groupe intermédiaire comprenant des paires d'interrupteurs ($12_{i,k}, 14_{i-1k}$), | connectées en série, de cellules appartenant à deux étages voisins, et **en ce que** les condensateurs ($20_{1,k}, ..., 20_{n,k}$) de même rang ($18_k$) sont connectés transversalement en série entre les deux groupes extrêmes.

**2.** Dispositif de conversion réversible d'énergie électrique selon la revendication 1, **caractérisé en ce que** le groupe intermédiaire comprend des interrupteurs ($12_{i,k}, 14_{i,k}$), connectés en série, de cellules appartenant alternativement à deux étages voisins, lesdits interrupteurs étant unidirectionnels en tension et bidirectionnels en courant.

**3.** Dispositif de conversion réversible d'énergie électrique selon la revendication 1, **caractérisé en ce que** les deux interrupteurs ($12_{i,k}, 14_{i-1,k}$) de chacune desdites paires sont connectés en parallèle et **en ce qu'**ils sont bidirectionnels en tension et unidirectionnels en courant.

**4.** Dispositif de conversion réversible d'énergie électrique selon l'une des revendications 1 à 3, **caractérisé en ce que** les composants formant interrupteurs ($12_{i,k}, 14_{i,k}$) sont tous identiques et **en ce que** chaque interrupteur est constitué de composants connectés en série dont le nombre est fonction de la tension maximale applicable entre ses bornes.

**5.** Dispositif de conversion réversible d'énergie électrique selon l'une des revendications 1 à 4, **caractérisé en ce que** les moyens de pilotage (22, 24, 30, 32) comportent des moyens de traitement (30, 32) du signal de référence pour délivrer en sortie une pluralité de signaux secondaires de référence, et des moyens de transmission de chaque signal secondaire de référence à tous les dispositifs de commande de cellule de commutation d'un même étage.

**6.** Dispositif de conversion réversible d'énergie électrique selon la revendication 5, **caractérisé en ce que** les moyens de traitement (30, 32) sont adaptés pour délivrer une pluralité de signaux secondaires de référence dont la somme des valeurs à chaque instant est proportionnelle à la valeur du signal de référence, chaque signal secondaire de référence d'un étage situé, du côté de la source de tension (2), entre deux niveaux de potentiel donnés étant à chaque instant de valeur supérieure à la valeur d'un signal secondaire de référence d'un étage situé, du côté de la source de tension (2), entre deux niveaux de potentiel supérieurs.

7. Dispositif de conversion réversible d'énergie électrique selon l'une des revendications 1 à 6, **caractérisé en ce qu'**il comporte deux étages ($8_1$, $8_2$).

8. Dispositif de conversion réversible d'énergie électrique selon la revendication 7, **caractérisé en ce que** la partie du dispositif située entre les deux condensateurs ($20_{1,1}$, $20_{2,1}$) les plus proches de la source de courant (4) et la source de courant (4) comporte deux composants formant interrupteurs (38, 40, 42, 44) connectés en série sur chacun des premier et dernier groupes et deux diodes (34, 36) connectées d'une part en un point situé entre lesdits deux condensateurs et d'autre part en un point situé entre lesdits deux composants des premier et dernier groupes respectivement.

9. Dispositif de conversion réversible d'énergie électrique selon la revendication 7 ou 8, **caractérisé en ce que** chaque étage ($8_1$, $8_2$) comporte deux cellules de commutation.

10. Dispositif de conversion réversible d'énergie électrique selon la revendication 7 ou 8, **caractérisé en ce que** chaque étage ($8_1$, $8_2$) comporte trois cellules de commutation.

**Claims**

1. Device for reversible conversion of electrical energy between a DC voltage source (2) and a current source (4), comprising, on the one hand, switching cells ($10_{i,k}$) each having two switches ($12_{i,k}$, $14_{i,k}$), each switch itself being constituted by at least one component forming a switch, and, on the other hand, capacitors ($20_{i,k}$) associated with the switching cells ($10_{i,k}$) and adapted to maintain between the homologous terminals of the two switches of each cell a load voltage equal to a fraction of the voltage of the voltage source (2), decreasing as a function of their rank starting from the current source (2), and the homologous terminals of the switches situated at the end of the device close to the current source (4) being short-circuitable, and furthermore control devices ($16_{i,k}$) each connected to a switching cell ($10_{i,k}$) and adapted to control the switchings of the two switches ($12_{i,k}$, $14_{i,k}$) of the cell whilst ensuring opposite states for them, as well as means (22, 24, 30, 32) for operating the control devices adapted to supply a reference signal adapted to the desired conversion, **characterised in that** it comprises at least two parallel-connected stages ($8_i$) each having at least two cells ($10_{i,1}$, ..., $10_{i,p}$) and at least one capacitor ($20_{i,1}$, ..., $20_{i,p-1}$), the said stages defining two end groups of switches ($12_{1,1}$, ... $12_{1,p}$ et $14_{n,1}$, ... $14_{n,p}$) and at least one intermediate group of switches common to two successive stages, the two end groups each comprising series-connected switches of each cell belonging respectively to the first and to the last stages, the intermediate group comprising pairs of series-connected switches ($12_{i,k}$, $14_{i-1,k}$) of cells belonging to two neighbouring stages, and that the capacitors ($20_{1,k}$, ..., $20_{n,k}$) of the same rank ($18_k$) are connected transversely in series between the two end groups.

2. Device for reversible conversion of electrical energy as claimed in Claim 1, **characterised in that** the intermediate group comprises series-connected switches ($12_{i,k}$, $14_{i,k}$) of cells belonging alternately to two neighbouring stages, the said switches being unidirectional in voltage and bidirectional in current.

3. Device for reversible conversion of electrical energy as claimed in Claim 1, **characterised in that** the two switches ($12_{i,k}$, $14_{i,1,k}$) of each of the said pairs are connected in parallel and are bidirectional in voltage and unidirectional in current.

4. Device for reversible conversion of electrical energy as claimed in one of Claims 1 to 3, **characterised in that** the components forming switches ($12_{i,k}$, $14_{i,k}$) are all identical and that each switch is constituted by series-connected components, the number of which is a function of the maximum voltage applicable between its terminals.

5. Device for reversible conversion of electrical energy as claimed in one of Claims 1 to 4, **characterised in that** the operating means (22, 24, 30, 32) include means (30, 32) for processing the reference signal so as to deliver at the output a plurality of secondary reference signals, and means for transmission of each secondary reference signal to all the switching cell control devices of one and the same stage.

6. Device for reversible conversion of electrical energy as claimed in Claim 5, **characterised in that** the processing means (30, 32) are adapted to deliver a plurality of secondary reference signals of which the sum of the values at each instant is proportional to the value of the reference signal, each secondary reference signal of a stage situated, on the voltage source (2) side, between two given potential levels having at each instant a value higher than the value of a secondary reference signal of a stage situated, on the voltage source (2) side, between two higher potential levels.

7. Device for reversible conversion of electrical energy as claimed in one of Claims 1 to 6, **characterised**

**in that** it has two stages ($8_1$, $8_2$).

8. Device for reversible conversion of electrical energy as claimed in Claim 7, **characterised in that** the part of the device situated between the two capacitors ($20_{1,1}$, $20_{2,1}$) closest to the current source (4) and the current source itself (4) includes two components forming series-connected switches (38, 40, 42, 44) on each of the first and last groups and two diodes (34, 36) connected, on the one hand, at a point situated between the said two capacitors and, on the other hand, at a point situated between the said two components of the first and last groups respectively.

9. Device for reversible conversion of electrical energy as claimed in Claim 7 or 8, **characterised in that** each stage ($8_1$, $8_2$) includes two switching cells.

10. Device for reversible conversion of electrical energy as claimed in Claim 7 or 8, **characterised in that** each stage ($8_1$, $8_2$) includes three switching cells.

**Patentansprüche**

1. Vorrichtung zur reversiblen Umwandlung elektrischer Energie zwischen einer Gleichspanungsquelle (4) und einer Stromquelle (4), mit einerseits Kommutationszellen ($10_{i,k}$) mit jeweils zwei Schaltern ($12_{i,k}$, $14_{i,k}$), die jeweils selbst aus zumindest einem Schalter bildenden Bauteil bestehen, und andererseits den Kommutationszellen ($10_{i,k}$) zugehörigen Kondensatoren ($20_{i,k}$), die dafür eingerichtet sind, zwischen den homologen Anschlussklemmen der beiden Schalter jeder Zelle eine Ladespannung aufrechtzuerhalten, die gleich einem Bruchteil der Spannung der Spannungsquelle (2) und in Abhängigkeit von ihrer Rangstufe von der Spannungsquelle (2) an abnehmend ist, wobei die homologen Anschlussklemmen der Schalter, die am Ende der Vorrichtung nahe der Stromquelle (4) angeordnet sind, kurzzuschließen sind, mit außerdem Steuervorrichtungen (16i,k), die jeweils an eine Kommutationszelle ($10_{i,k}$) angeschlossen und dafür eingerichtet sind, die Umschaltungen der beiden Schalter ($12_{i,k}$, $14_{i,k}$) der Zelle zu steuern, wobei sie entgegen gesetzte Zustände dieser sicherstellen, sowie Einrichtungen zur Fernsteuerung (22, 24, 30, 32) der Steuervorrichtungen, die dafür eingerichtet sind, ein Referenzsignal zu liefern, das für die gewünschte Umwandlung geeignet ist, **dadurch gekennzeichnet, dass** die Vorrichtung zumindest zwei parallel geschaltete Stufen ($8_i$) aufweist, welche jeweils zumindest zwei Zellen ($10_{i,1}$,..., $10_{i,p}$) und zumindest einen Kondensator ($20_{i,1}$...$20_{i,p-1}$) aufweisen, wobei die Stufen zwei Schalterendgruppen ($12_{1,1}$...$12_{1,p}$ und 14n,1,...14n,p) und zumindest eine Schalterzwischengruppe definieren, welche zwei aufeinander folgenden Stufen gemeinsam ist, wobei die beiden Endgruppen jeweils in Reihe geschaltete Schalter jeder Zelle aufweisen, die jeweils zur ersten und zur letzten Stufe gehört, wobei die Zwischengruppe in Reihe geschaltete Schalterpaare ($12_{i,k}$, $14_{i-1,k}$) von Zellen aufweist, die zu zwei benachbarten Stufen gehören, und dass die Kondensatoren ($20_{i,k}$,...$20_{n,k}$) der gleichen Rangstufe ($18_k$) quer in Reihe zwischen den beiden Endgruppen geschaltet sind.

2. Vorrichtung zur reversiblen Umwandlung elektrischer Energie gemäß Anspruch 1, **dadurch gekennzeichnet, dass** die Zwischengruppe in Reihe geschaltete Schalter ($12_{i,k}$, $14_{i,k}$) von Zellen aufweist, die wechselweise zu zwei benachbarten Stufen gehören, wobei die Schalter bezüglich der Spannung in einer Richtung fließend ausgebildet und bezüglich des Stroms in zwei Richtungen fließend ausgebildet sind.

3. Vorrichtung zur reversiblen Umwandlung elektrischer Energie gemäß Anspruch 1, **dadurch gekennzeichnet, dass** die beiden Schalter ($12_{i,k}$, $14_{i-1,k}$) jedes der besagten Paare parallel geschaltet sind, und dass sie bezüglich der Spannung in zwei Richtungen fließend ausgebildet und bezüglich des Stroms in einer Richtung fließend ausgebildet sind.

4. Vorrichtung zur reversiblen Umwandlung elektrischer Energie gemäß einem der Ansprüche 1 bis 3, **dadurch gekennzeichnet, dass** die Schalter bildenden Bauteile ($12_{i,k}$, $14_{i,k}$) alle identisch ausgebildet sind, und dass jeder Schalter von in Reihe geschalteten Bauteiles gebilde ist, deren Anzahl von der zwischen seinen Anschlussklemmen anlegbaren maximalen Spannung abhängt.

5. Vorrichtung zur reversiblen Umwandlung elektrischer Energie gemäß einem der Ansprüche 1 bis 4, **dadurch gekennzeichnet, dass** die Einrichtungen zur Fernsteuerung (22, 24, 30, 32) Einrichtungen zur Verarbeitung (30, 32) des Referenzsignals aufweisen, um am Ausgang eine Vielzahl von sekundären Referenzsignalen zu liefern, und Einrichtungen zur Übertragung jedes sekundären Referenzsignals an alle Steuervorrichtungen von Kommutationszellen einer gleichen Stufe.

6. Vorrichtung zur reversiblen Umwandlung elektrischer Energie gemäß Anspruch 5, **dadurch gekennzeichnet, dass** die Verarbeitungseinrichtungen (30, 32) dafür eingerichtet sind, eine Vielzahl von sekundären Referenzsignalen zu liefern, deren Wertesumme zu jedem Zeitpunkt proportional zu dem Wert des Referenzsignals ist, wobei jedes sekundäre Referenzsignal einer Stufe, die auf der Seite der Spannungsquelle (2) zwischen zwei gegebenen Potentialniveaus angeordnet ist, zu jedem Zeitpunkt einen höheren Wert aufweist als der Wert eines sekundären Referenzsignals einer Stufe, die auf der Seite der Spannungsquelle (2) zwischen zwei höheren Potentialniveaus angeordnet ist.

7. Vorrichtung zur reversiblen Umwandlung elektrischer Energie gemäß einem der Ansprüche 1 bis 6, **dadurch gekennzeichnet, dass** sie zwei Stufen $(8_1, 8_2)$ aufweist.

8. Vorrichtung zur reversiblen Umwandlung elektrischer Energie gemäß Anspruch 7, **dadurch gekennzeichnet, dass** der Bereich der Vorrichtung, der zwischen den beiden, der Stromquelle (4) am nächsten liegenden Kondensatoren $(20_{1,1}, 20_{2,1})$ und der Stromquelle (4) liegt, zwei Schalter bildende Bauteile (38, 40, 42, 44) aufweist, die in Reihe auf jeweils die erste und letzte Gruppe geschaltet sind, und zwei Dioden (34, 36), die einerseits an einer zwischen den beiden Kondensatoren angeordneten Stelle und andererseits an einer zwischen den beiden Bauteilen der jeweils ersten und letzten Gruppe angeschlossen sind.

9. Vorrichtung zur reversiblen Umwandlung elektrischer Energie gemäß Anspruch 7 oder 8, **dadurch gekennzeichnet, dass** jede Stufe $(8_1, 8_2)$ zwei Kommutationszellen aufweist.

10. Vorrichtung zur reversiblen Umwandlung elektrischer Energie gemäß Anspruch 7 oder 8, **dadurch gekennzeichnet, dass** jede Stufe $(8_1, 8_2)$ drei Kommutationszellen aufweist.

_FIG.1_

EP 1 287 609 B1

## FIG.2

EP 1 287 609 B1

**FIG.3**

FIG.4

FIG. 5

FIG. 6

$Sr_2$   $Sd_1$

$Sc_{2,1}$

FIG. 7

$Sr_2$   $Sd_2$

$Sc_{2,2}$

FIG. 8

$$FIG.9$$

F.IG. 10

**FIG.11**

**EP 1 287 609 B1**

**RÉFÉRENCES CITÉES DANS LA DESCRIPTION**

**Documents brevets cités dans la description**

- EP 0555432 A